# FASCICULE DE BREVET EUROPEEN

(11) **EP 1 644 213 B1**
(45) Date de publication et mention de la délivrance du brevet: **13.06.2007**
(21) Numéro de dépôt: 04767708.3
(22) Date de dépôt: 16.07.2004
(51) Int. Cl.: B60J 7/047

(54) **SYSTEME DE TOIT OUVRANT A PANNEAUX SUPERPOSABLES ET VEHICULE AINSI EQUIPE**
SCHIEBEDACHSYSTEM MIT STAPELBAREN PLATTEN UND DAMIT AUSGESTATTETES FAHRZEUG
SLIDING ROOF SYSTEM WITH STACKABLE PANELS AND VEHICLE EQUIPPED THEREWITH

(30) Priorité: 16.07.2003 FR 0308695; 16.07.2003 FR 0308694; 08.08.2003 FR 0309792
(43) Date de publication de la demande: 12.04.2006
(73) Titulaire: Société Européenne de Brevets Automobiles, 75011 Paris 11 (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirieres (FR)
(74) Mandataire: Pichat, Thierry
(86) Numéro de dépôt international: PCT/FR2004/001884
(87) Numéro de publication internationale: WO 2005/007434

(56) Documents cités:
- FR-A- 2 730 958
- FR-A- 2 798 327
- US-A1- 2002 125 743
- US-A1- 2002 163 227
- US-B1- 6 409 260

## Description

La présente invention concerne un toit escamotable de véhicule selon le préambule de la revendication 1, et plus particulièrement un tel toit comprenant plusieurs panneaux (ou éléments) de toit rigides, dont l'un au moins est déplaçable entre une position dans laquelle des panneaux de toit ferment l'habitacle du véhicule, sur le dessus, et une position dans laquelle ils dégagent une ouverture dans le pavillon. Un toit de ce type est connu du document FR 2 730 958 A.

Certains toits, dont si nécessaire celui de l'invention, sont escamotables derrière l'habitacle du véhicule, permettant alors de transformer un véhicule du type berline ou coupé en un véhicule du type cabriolet.

Une des difficultés rencontrées dans la conception de ce type de toit réside dans le stockage des éléments de toit dans le coffre arrière du véhicule.

Une autre difficulté réside dans la conception et la réalisation de la cinématique de mouvement des éléments de toit lorsqu'ils sont sur le dessus du toit.

C'est pour cela qu'il va être ici question d'un système de toit ouvrant pour un véhicule automobile, ainsi que d'un véhicule ainsi équipé.

On connaît déjà différents systèmes de toit ouvrant comprenant au moins un panneau de toit avant et un panneau de toit arrière, ces panneaux étant mobiles suivant une direction longitudinale (correspondant à la direction longitudinale d'avance du véhicule) entre une position affleurante dans laquelle les panneaux sont disposés sensiblement au même niveau l'un par rapport à l'autre, le panneau de toit avant étant alors situé devant le panneau de toit arrière, suivant ladite direction longitudinale, et une position décalée en hauteur dans laquelle les panneaux de toit sont disposés l'un au-dessus de l'autre.

A partir d'un tel système connu, un but est ici de proposer un système de toit ouvrant fiable, relativement simple mécaniquement, d'un prix de revient compatible avec une production en série en liaison avec des constructeurs automobiles, et qui évite les problèmes déjà rencontrés de coordination dans les mouvements des panneaux assurant une cinématique performante et fiable.

Pour cela, une caractéristique importante prévoit que :
- l'un parmi les panneaux de toit avant et arrière comprend un groupe de leviers avant et un groupe de leviers arrière montés articulés par rapport à ce panneau de toit, pour basculer entre :
   * une position basse dans laquelle le panneau concerné affleure sensiblement une partie environnante de la structure du véhicule,
   * et une position haute dans laquelle ledit panneau concerné est décalé en hauteur par rapport au niveau de sa position affleurante,
- l'un au moins parmi lesdites panneaux de toit comprenant les groupes de leviers et l'autre panneau comprend des moyens d'entraînement pour entraîner les groupes de leviers et l'un des panneaux:
   * soit de l'avant vers l'arrière, sur une distance assurant le passage du panneau de toit de sa position affleurante à sa position décalée en hauteur,
   * soit de l'arrière vers l'avant, sur ladite distance, mais en sens inverse, pour assurer un passage du panneau de toit concerné de sa position décalée vers sa position affleurante, et
- les groupes de leviers engagent, sous la commande des moyens d'entraînement, des guides s'étendant essentiellement sensiblement parallèlement à ladite direction longitudinale, ces guides étant adaptés pour :
   * lors du déplacement commandé de l'avant vers l'arrière des groupes de leviers, guider leur basculement de la position affleurante du panneau correspondant vers sa position décalée,
   * et, lors du déplacement commandé de l'arrière vers l'avant de ces mêmes groupes de leviers, guider leur basculement de la position décalée du panneau correspondant vers sa position, affleurante.

Pour favoriser encore l'obtention des buts fixés ci-avant, avec une mécanique toute à la fois relativement simple, performante et fiable, une autre caractéristique conseille que les groupes de levier comprennent, individuellement, un levier coudé comprenant une première branche articulée en rotation sur le panneau de toit correspondant et reliée fixement par un coude à une deuxième branche, laquelle engage l'un desdits guides, pour son entraînement guidé.

Toujours dans le même but, et en tirant parti de l'utilisation déjà connue de moyens de coulissement de type "glissières", une autre caractéristique prévoit que les guides des leviers équipant le(s) panneau(x) de toit concerné(s) comprennent avantageusement des glissières dans lesquelles coulissent ces groupes de levier, les glissières présentant localement des déviations s'étendant obliquement par rapport à l'horizontale et par rapport à ladite direction longitudinale, sur une longueur suffisante pour recevoir, individuellement, une partie d'un desdits groupes de levier, de telle sorte qu'une fois engagés dans ces déviations, les groupes de leviers concernés passent, en pivotant, de l'une de leurs positions haute ou basse vers l'autre.

Si, comme cela est supposé, un intérêt a été trouvé dans l'utilisation des deux caractéristiques qui précèdent, il est par ailleurs conseillé, pour simplifier l'entraînement en coulissement tant vers l'avant que vers l'arrière du (des) panneau (x) de toit concerné(s):
- que la deuxième branche de certains des panneaux est monté coulissant par rapport à l'autre suivant ladite direction longitudinale, le long de secondes rainures desdites glissières,
- que certains au moins des leviers équipant le panneau correspondant comprennent au moins un coulisseau monté glissant dans la première rainure correspondante,
- que lesdits moyens d'entraînement présentent une extrémité avant et une extrémité arrière, -et que ces moyens d'entraînement comprennent un crochet d'entraînement présentant une gorge d'entraînement adaptée pour recevoir ledit coulisseau et l' entraîner le long de la première rainure correspondante, la gorge se prolongeant, à l'avant, par une paroi d'entraînement adapté pour entraîner vers l'arrière le coulisseau correspondant, le long de ladite première rainure, cette gorge se prolongeant à l'arrière par un doigt d'entraînement court ménageant une ouverture d'accès pour le coulisseau, par l'arrière dudit crochet d'entraînement, de telle sorte que le doigt d'entraînement court entraîne le coulisseau vers l'avant tant qu'il engage la première rainure suivant sensiblement ladite direction longitudinale, mais se dégageant du coulisseau lorsque ce dernier s'engage dans la déviation de ladite première rainure qu'il rencontre, cette déviation étant alors située dans le prolongement de la première rainure et faisant avec elle un angle obtus pour que le coulisseau puisse s'y engager dans le sens de son entraînement.

Une telle caractéristique est en particulier applicable aux cas où le panneau avant de toit est monté coulissant par rapport au panneau arrière pour passer sous lui.

Dans ce cas, on conseille subsidiairement que :
- les coulisseaux soient disposés sur la deuxième branche de certains au moins des leviers,
- que lesdits moyens d'entraînement soient allongés selon la direction longitudinale de déplacement des panneaux de toit l'un par rapport à l'autre,
- et que les déviations de chaque première rainure soient orientées vers le haut, les groupes de levier étant liés au panneau arrière sous lequel s'étend ladite première rainure.

En combinaison avec tout ou partie des caractéristiques qui précèdent concernant cette mécanique de panneaux de toit, on obtient alors un mécanisme fiable et efficace pour un tel mouvement faisant passer l'élément de toit avant sous l'élément de toit arrière.

Tout particulièrement dans ce cas, une autre caractéristique conseille même que les moyens d'entraînement comprennent, vers leur extrémité arrière, un poussoir adapté pour engager au moins un levier du groupe de leviers avant, alors que celui-ci est en position basse et l'entraîner avec lui dans le sens de déplacement vers l'arrière desdits moyens d'entraînement.

Toujours dans la même situation, on conseille encore que les moyens d'entraînement du panneau de toit avant comprennent, vers leur extrémité arrière, un deuxième doigt d'entraînement adapté pour engager entièrement, dans les déviations correspondantes, le groupe de leviers avant équipant le panneau de toit arrière, une fois ces leviers dégagés du doigt d'entraînement court correspondant, consécutivement à un coulissement vers l'avant du panneau de toit avant, de manière que le panneau de toit arrière passe alors dans sa position affleurante.

Ce deuxième doigt permet d'assurer, avec une solution simple, fiable et performante, un complet engagement des leviers dans les déviations correspondantes, conduisant ainsi de manière efficace le panneau arrière de toit dans sa position basse, affleurante.

Pour par ailleurs satisfaire au problème évoqué en début de description du stockage des éléments de toit dans le coffre arrière du véhicule, il est en outre ici proposé que le toit escamotable comprenne:
un élément de toit central arrière, un élément de toit central intermédiaire et un élément de toit central avant ;
un élément de toit latéral arrière gauche, un élément de toit latéral avant gauche, un élément de toit latéral arrière droit, et un élément de toit latéral avant droit;
des moyens pour faire coulisser l'élément de toit central arrière dans un hayon de coffre arrière ;
des moyens pour disposer l'élément de toit central intermédiaire et l'élément de toit central avant en position de recouvrement et pour escamoter l'ensemble ainsi obtenu verticalement à l'avant du coffre arrière ;
des moyens pour disposer l'élément de toit latéral arrière gauche et l'élément de toit latéral avant gauche en position de recouvrement et pour escamoter l'ensemble ainsi obtenu horizontalement dans le coffre arrière à l'arrière de l'ensemble constitué par l'élément de toit central intermédiaire et l'élément de toit central avant ; et
des moyens pour disposer l'élément de toit latéral arrière droit et l'élément de toit latéral avant droit en position de recouvrement et pour escamoter l'ensemble ainsi obtenu horizontalement dans le coffre au-dessus ou au-dessous de l'ensemble constitué par l'élément de toit latéral arrière gauche et l'élément de toit latéral avant gauche.

Comme on l'aura compris de ce qui précède, les moyens pour disposer l'élément de toit central intermédiaire et l'élément de toit central avant en position de recouvrement comprendront avantageusement des moyens de coulissement relatif de l'élément de toit central intermédiaire et de l'élément de toit central avant.

Plus particulièrement, lesdits moyens de coulissement peuvent comprendre au moins une glissière latérale longitudinale sur laquelle est monté l'élément de toit central intermédiaire, et agencée pour coopérer avec un coulisseau sur lequel est monté l'élément de toit central avant.

Il sera alors possible de faire coulisser l'élément de toit central avant pour l'amener au niveau de l'élément de toit central intermédiaire, et ainsi de dégager la partie avant du toit.

On observera que, par "longitudinal", on entend généralement parallèle à la direction avant/arrière du véhicule. De même, par "transversal", on entend généralement perpendiculaire au plan de symétrie du véhicule.

Encore plus particulièrement, ledit coulisseau peut comporter des galets aptes à se déplacer dans une première rainure de ladite glissière.

Par ailleurs, l'élément de toit central intermédiaire peut être monté sur des galets aptes à se déplacer dans une deuxième rainure de ladite glissière.

Egalement dans un mode de réalisation particulier, les moyens pour escamoter l'ensemble constitué par l'élément de toit central intermédiaire et l'élément de toit central avant verticalement à l'avant du coffre arrière comprennent au moins deux leviers articulés à une de leurs extrémités sur la structure du véhicule et formant un quadrilatère déformable.

Dans le cas d'un montage à glissière, lesdits leviers peuvent être articulés à leur autre extrémité sur ladite glissière.

Dans un mode de réalisation particulier, les moyens pour disposer l'élément de toit latéral arrière gauche (respectivement droit) et l'élément de toit latéral avant gauche (respectivement droit) en position de recouvrement comprennent une articulation autour d'un axe transversal entre le bord avant de l'élément de toit latéral arrière gauche (respectivement droit) et le bord arrière de l'élément de toit latéral avant gauche (respectivement droit).

La partie latérale du toit se replie donc autour d'un axe intermédiaire.

Egalement dans un mode de réalisation particulier, les moyens pour escamoter horizontalement dans le coffre arrière l'ensemble constitué par l'élément de toit latéral arrière gauche (respectivement droit) et l'élément de toit latéral avant gauche (respectivement droit) comprennent un organe de rabattement articulé sur la structure du véhicule autour d'un axe longitudinal entre une position de recouvrement et une position de rangement, et l'élément de toit latéral arrière gauche (respectivement droit) est articulé au voisinage de son bord arrière sur ledit organe de rabattement autour d'un axe généralement transversal lorsque ledit organe de rabattement est dans sa position de recouvrement et généralement vertical lorsque ledit organe de rabattement est dans sa position de rangement.

Plus particulièrement, les moyens pour disposer l'élément de toit latéral arrière gauche (respectivement droit) et l'élément de toit latéral avant gauche (respectivement droit) en position de recouvrement peuvent comprendre au moins un levier ayant une de ses extrémités articulée sur l'organe de rabattement à une certaine distance de l'axe d'articulation de l'élément de toit latéral arrière gauche (respectivement droit) et son autre extrémité articulée sur l'élément de toit latéral avant gauche (respectivement droit) à une certaine distance de l'axe d'articulation de l'élément de toit latéral arrière gauche (respectivement droit).

Une description encore plus détaillée du présent sujet suit, de façon exemplaire en référence aux dessins schématiques annexés dans lesquels :
- la figure 1 est une vue en perspective d'un toit ouvrant utilisable ici ;
- la figure 2 est une vue de côté des moyens de rabattement des éléments latéraux du toit de la fig.1 en position de recouvrement et en position intermédiaire de rabattement ;
- la figure 3 est une vue en perspective des moyens de rangement des éléments centraux du toit dans leur position de recouvrement et dans leur position de rangement ;
- la figure 4 est une vue en coupe des glissières de la fig.3 ;
- la figure 5 est une vue de côté des éléments du toit en position de rangement ;
- la figure 6 est une vue de l'arrière de ces éléments en position de rangement,
- la figure 7 montre un autre mécanisme de toit permettant le coulissement relatif d'un élément (ou panneau) de toit avant par rapport à un élément (ou panneau) de toit arrière, les deux panneaux étant en position fermée, sensiblement au même niveau l'un devant l'autre sur la figure 7, tandis que le panneau avant est passé sous le panneau arrière sur la figure 8,
- les figures 9, 10 et 11 montrent trois situations différentes de coulissement et de positions des panneaux avant et arrière concernés,
- et les figures 12 et 13 montrent une alternative de réalisation dans laquelle le panneau avant de toit passe par dessus le panneau arrière lorsqu'il recule, libérant ainsi une ouverture au-dessus de l'habitacle, dans le toit.

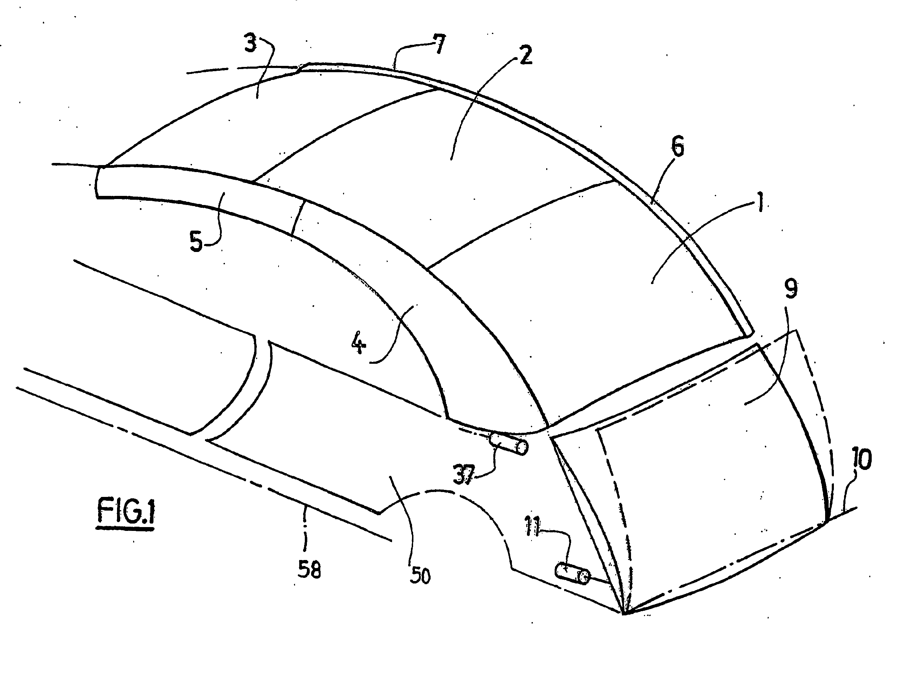

Le toit montré à la figure 1 comprend un élément de toit central arrière 1, généralement constitué par la vitre arrière, un élément de toit central intermédiaire 2 et un élément de toit central avant 3 rejoignant le bord supérieur du pare-brise. Le toit selon l'invention comporte également un élément de toit latéral arrière gauche 4, un élément de toit latéral avant gauche 5, un élément de toit arrière droit 6 et un élément de toit latéral avant droit 7.

Ces éléments de toit relient par conséquent d'avant en arrière le bord supérieur du pare-brise au bord supérieur du hayon 9 de coffre arrière et latéralement les bords supérieurs des vitres latérales du véhicule (non représentées).

Des moyens connus, et par conséquent non décrits ci-après, permettent le coulissement de l'élément de toit central arrière, et plus particulièrement de sa vitre, dans le hayon 9. Par ailleurs, ce hayon 9 est articulé le long de son bord inférieur au châssis du véhicule selon un axe de rotation transversal 10, et actionnable au moyen d'un vérin 11 permettant son ouverture pour l'insertion de l'élément de toit central arrière 1.

Les agencements décrits ci-après sont généralement du même type de chaque côté du véhicule.

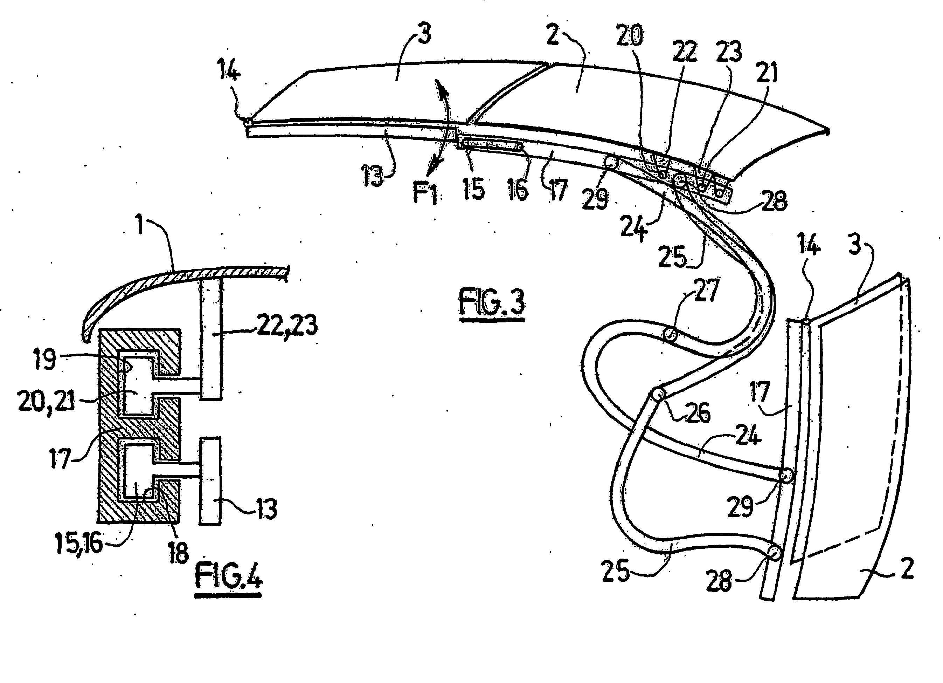

Comme montré à la figure 3, l'élément de toit central avant 3 est monté latéralement sur des coulisseaux 13. L'élément central avant 3 est monté sur les coulisseaux 13 par l'intermédiaire d'un axe de rotation 14 transversal situé au bord avant de l'élément 3 et à l'extrémité avant des coulisseaux 13. Cet axe de rotation permet un mouvement vers le haut et vers le bas selon la flèche F1 du bord arrière de l'élément 3.

Chaque coulisseau 13 est monté par l'intermédiaire de galets 15 et 16 sur une glissière 17. La glissière 17 comporte deux rainures 18 et 19, la rainure 18 recevant les galets 15 et 16.

La rainure 19 reçoit deux galets 20 et 21 solidaires de deux ferrures 22 et 23 supportant l'élément de toit central intermédiaire 2.

Des moyens de motorisation de tout type connu permettent le coulissement des coulisseaux 13 dans les glissières, ainsi que le coulissement des galets des ferrures 22 et 23 dans ces mêmes glissières.

Deux leviers 24 et 25 sont articulés autour d'un axe transversal respectivement 26 et 27 à la structure du véhicule à une de leurs extrémités. A leur autre extrémité, ces leviers sont articulés, également autour d'un axe transversal à la glissière 17 autour d'axes 28 et 29. Ces leviers 24 et 25 sont représentés en haut de la figure 3 dans la position qu'ils adoptent lorsque le toit recouvre l'habitacle du véhicule, et en partie basse de la figure lorsque le toit est rangé dans le coffre arrière.

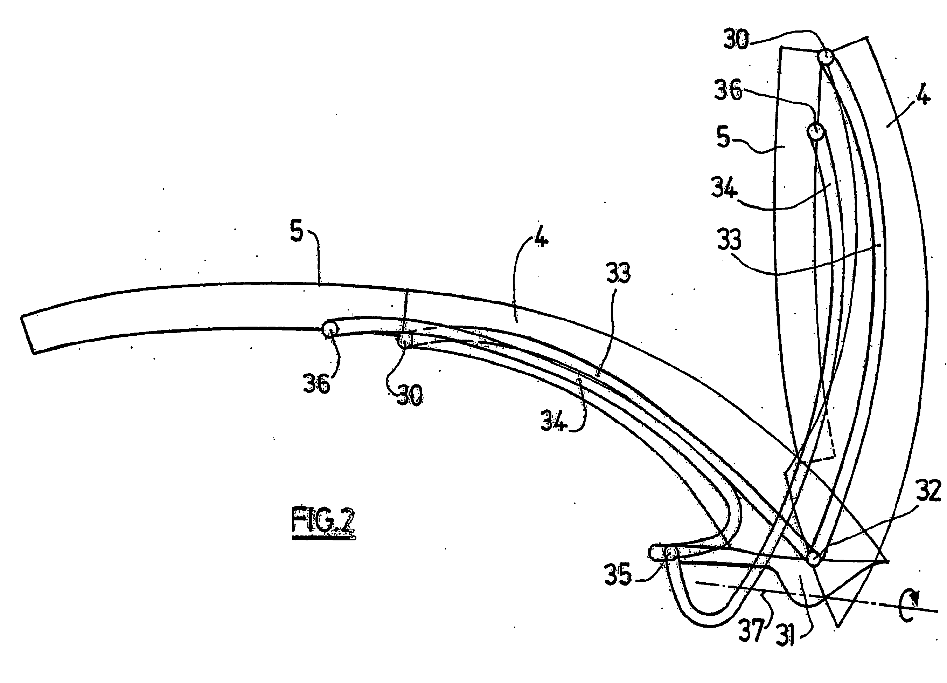

La figure 2 montre les éléments de toit latéraux gauches 4 et 5 ainsi que leur mécanisme de repliement. Les éléments latéraux droits sont similaires.

Le bord arrière de l'élément de toit latéral avant 5 est articulé sur le bord avant de l'élément de toit latéral arrière 4 autour d'un axe transversal 30. Le bord arrière de l'élément de toit latéral arrière 4 est articulé sur un organe de basculement 31 autour d'un axe 32. Les axes 30 et 32 sont transversaux lorsque le toit est, comme représenté à la figure 2, soit en position de recouvrement soit en position de repliement, et sont sensiblement verticaux lorsque le toit est en position de rangement comme cela sera exposé ci-après.

Un organe de renfort 33 a une de ses extrémités articulée sur l'axe 32 et son autre extrémité articulée sur l'axe 30. Un levier 34 est articulé sur l'organe de rabattement 31 sur un axe 35 également transversal mais situé à une certaine distance de l'axe 32 et son autre extrémité articulée sur l'élément de toit 5 autour d'un axe transversal 36 situé à une certaine distance de l'axe 30.

L'organe de rabattement 31 est monté pivotant par rapport à la structure du véhicule autour d'un axe 37 longitudinal.

Des moyens de motorisation de type connu, et donc non représentés, sont prévus pour actionner les éléments décrits ci-dessus.

Le passage du toit de sa position de recouvrement à sa position de rangement s'effectue de la façon suivante. Son passage inverse de la position de rangement à la position de recouvrement s'effectue de la manière inverse.

En premier lieu, le hayon est ouvert par rotation autour de l'axe 10 par l'action du vérin 11 et l'élément de toit 1 est coulissé dans le hayon 9.

L'élément 3 est ensuite basculé vers le bas autour de l'axe 14 puis est coulissé sous l'élément 2. Les leviers 25 et 26 sont ensuite basculés de manière à amener les éléments 2 et 3 dans la position représentée au bas de la figure 3 où ils se trouvent en position verticale à l'avant du coffre arrière du véhicule.

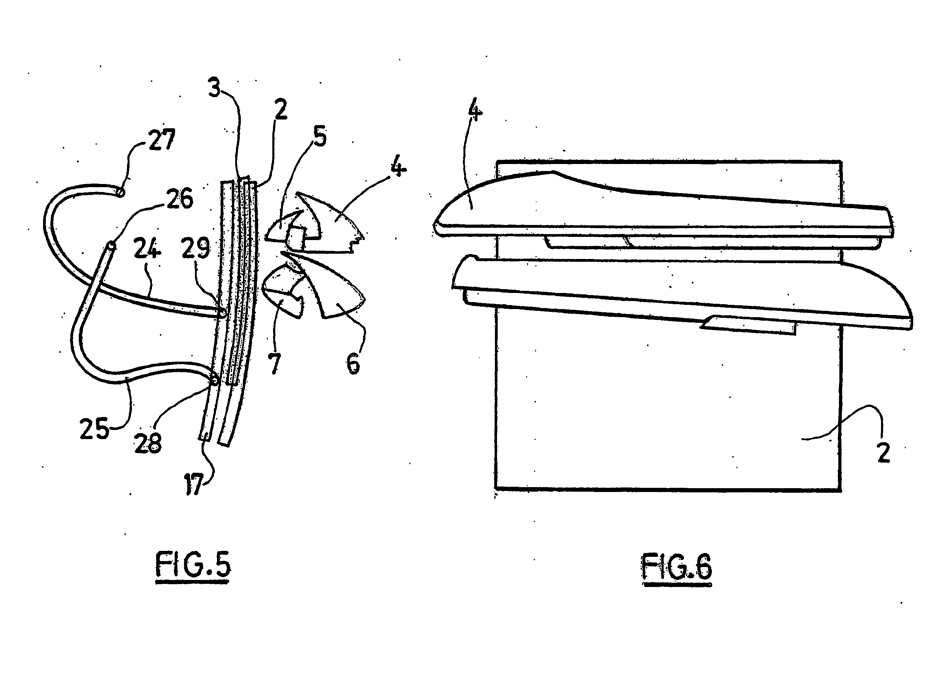

Les leviers 33 et 34 provoquent ensuite le relevage et le pliage des éléments de toit 4 et 5 dans la position représentée à la figure 2, puis un rabattement autour de l'axe 37 amène ces derniers éléments dans la position sensiblement horizontale de la figure 5 où ils se trouvent à l'arrière des éléments 2 et 3, superposés deux par deux.

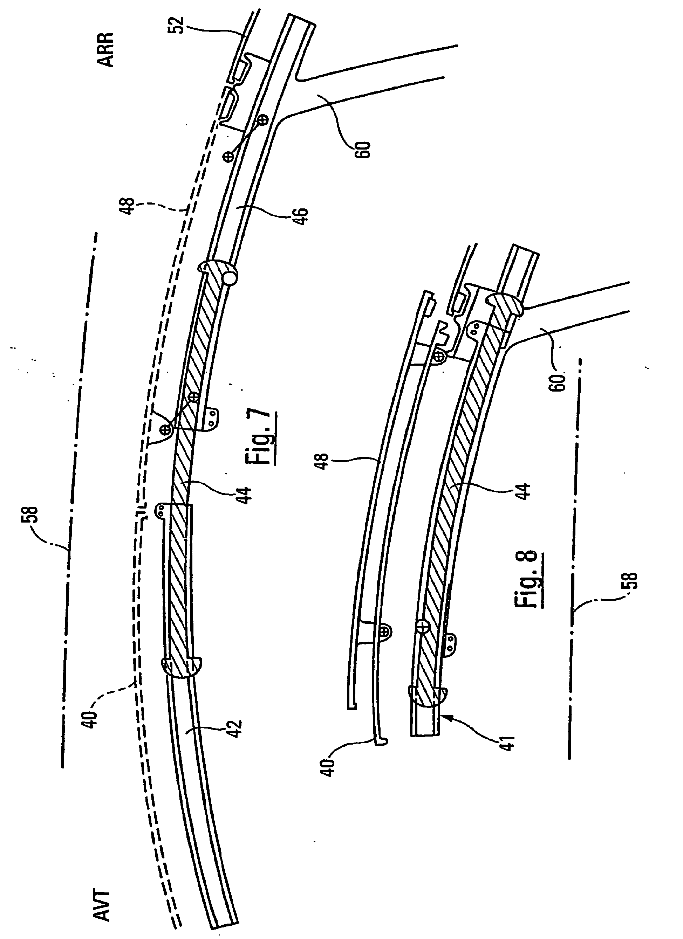

Dans le mode de réalisation des figures 7 à 12, l'élément (ou panneau) de toit avant 40 est monté sur une première glissière 42, laquelle est engagée avec une deuxième glissière 44, elle même engagée avec une troisième glissière 46 portée par l'élément de toit 48 lequel, en position fermée du toit au-dessus de l'habitacle comme sur la figure 7, est situé derrière le panneau 40, à son niveau, c'est-à-dire en position affleurante vis-à-vis de la structure environnante du véhicule (qui pourrait être constitué par les éléments 4, 5, 6, 7 comme dans l'exemple de la fig. 1 ou par la carrosserie 50).

Les panneaux de toit 40 et 48 définissent deux panneaux sensiblement plans situés devant un élément de toit arrière 52, lequel porte typiquement la lunette arrière du véhicule.

Eventuellement, la pièce 52 pourrait toutefois consister en une partie fixe du véhicule, c'est-à-dire définir une lunette fixe sur la carrosserie.

Cela étant, hormis,dans cette situation, on peut sur la figure 7 assimiler les éléments de toit 40, 48 et 52 aux éléments de toit respectivement 3, 2 et 1 de la figure 1, de sorte que l'élément avant de toit 40 vient donc, dans son état fermé comme sur la figure 7, au contact à l'avant du bandeau transversal 54 qui limite en partie supérieure le pare-brise 56 du véhicule (voir figure 1).

A noter également que pour assurer le déplacement relatif des panneaux 40, 48, le système de glissières 42, 44, 46 s'étend essentiellement sensiblement parallèlement à la direction longitudinale d'avance 58 du véhicule.

Si, une fois placés dans leur position superposée de la figure 8, les panneaux 40, 48 doivent être rangés dans le coffre arrière du véhicule, on prévoira avantageusement que la troisième glissière 46 soit liée fixement à un bras 60, de la même manière que l'élément arrière de toit 52 (s'il est mobile) pourra être lui-même relié à un autre bras (non représenté), ces deux bras d'articulation pouvant correspondre aux bras 24, 25 de la solution de la figure 3, articulés autour des axes transversaux 26, 27.

Comme on peut le constater au vu des figures 7 à 11, la version présentée ici est telle que, pour ouvrir le panneau de toit avant 40, il faut le faire coulisser de l'avant (AVT) vers l'arrière (ARR), ce coulissement provoquant l'élévation du panneau arrière 48 de manière à libérer sous lui un espace adapté pour recevoir le glissement sensiblement axial (quasiment sans changement de niveau) du panneau avant 40.

Le panneau 48 est lié à la glissière 46 (également appelée « première rainure ») par des bras respectivement avant 53a et arrière 53b faisant saillie sous lui et sur chacun desquels s'articule un levier (tel que 62,64, voir ci-après).

Ainsi, la partie de toit 48 va se surélever pour permettre le passage sous elle de la partie du toit avant 40. Une fois ces parties de toits avant et arrière 40, 48 superposées l'une sur l'autre en position sensiblement horizontale, elles pourront pivoter chacune selon le bras d'entraînement dans le coffre de rangement pour venir se positionner par exemple sensiblement à la verticale.

Comme déjà indiqué, l'élément de toit avant 40 est monté sur la glissière avant 42, tandis que l'élément de toit arrière est monté coulissant sur la glissière arrière 46, la glissière intermédiaire 44 commandant les mouvements du panneau mobile en hauteur (ici le panneau arrière 48).

Lors de la superposition des éléments de toit 40,48, l'élément de toit arrière 48 va se décaler vers le haut le long de la troisième glissière 46 pour permettre le passage sous lui de l'élément de toit avant 40.

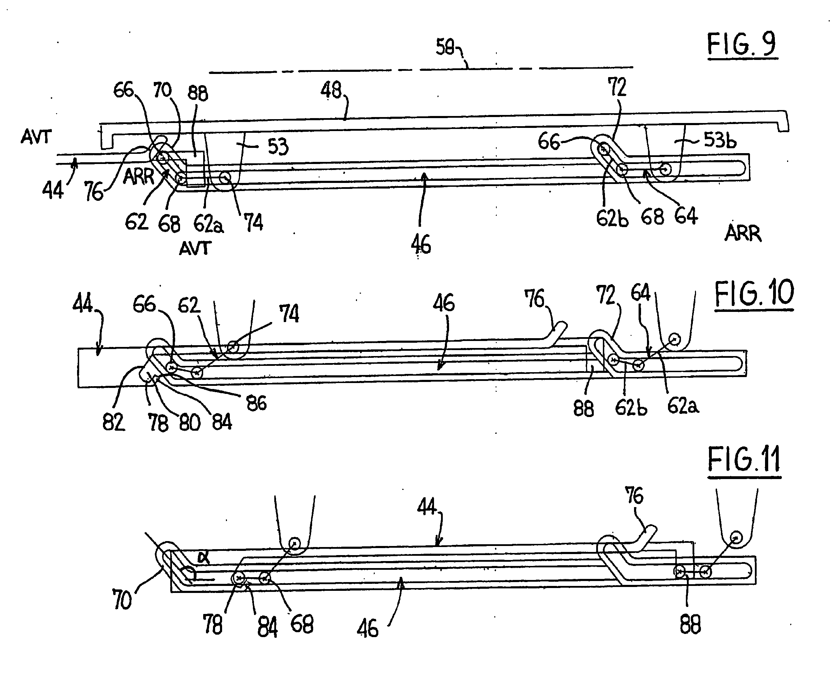

Comme montré aux figures 9 à 11, l'élément de toit arrière 48 est donc engagé dans la troisième glissière par des groupes de leviers avant et arrière 62,64 avantageusement chacun coudés. Chaque coude est articulé au toit arrière 48 par un axe de rotation perpendiculaire à la direction longitudinale 58. L'extrémité opposée à l'axe de rotation du coude considéré est engagé dans la troisième glissière 46 par deux coulisseaux, tels que 66,68.

Lorsque les éléments de toit 40,48 sont dans leur position fermée de la figure 7, ces éléments sont au même niveau.

La troisième glissière 48 comporte deux déviations, 70,72 orientées vers le haut et vers l'avant (en direction de leur extrémité libre) et situées respectivement à l'extrémité avant et à faible distance de l'extrémité arrière de la glissière .Lorsque le panneau arrière est en position « affleurante », basse des figures 7 et 9, les deux coulisseaux 66,68 de chaque coude sont totalement engagés dans ces déviations, par la branche 62b du levier considéré qui se termine par l'articulation au toit (en 74), tandis que l'autre partie 62a du coude située entre les coulisseaux le plus en arrière et le point d'articulation du coude par rapport à l'élément de toit arrière est sensiblement horizontale le long de la troisième glissière. Cette position du coude permet d'avoir le toit arrière en position basse et au même niveau que l'avant de l'élément de toit arrière 52.

Lors du coulissement arrière du panneau 40, la glissière intermédiaire 44 va venir en appui par une surface arrière 76 sur le coulisseau 66 alors engagé le plus en avant et le plus haut dans la déviation avant 70, pour permettre le basculement vers le haut de l'élément de toit 48 et son entraînement vers l'arrière.

Ainsi, cette deuxième glissière 44 peut comporter à son extrémité arrière une surface de contact (poussoir 76) dont l'extrémité est courbe vers le haut et vers l'arrière. Cette surface courbe va venir en appui sur le galet 66 le plus en avant et le plus haut et le déplacer le long de la déviation et vers le bas. Le deuxième coulisseau 68 le plus en arrière va également se déplacer le long de cette déviation pour s'engager dans la partie sensiblement horizontale de la troisième glissière. La partie du coude située entre le deuxième coulisseau et l'articulation 74 du toit et du coude va alors se décaler vers le haut entraînant le toit arrière vers le haut et vers l'arrière.

La glissière 44 comporte également une zone formant crochet 78. Ce crochet est situé en arrière de la dite surface de contact lorsque que la dite deuxièmes glissière se déplace vers l'arrière ; il est donc placé sur l'avant de la deuxième glissière 44 (voir fig.l0). Cette dite zone de crochetage va permettre de continuer le mouvement de montée de l'élément de toit 48, ainsi que son entraînement « horizontal » vers l'arrière, sur une courte distance, adaptée pour permettre le basculement des leviers avant et arrière 62, 64. Ce crochet 78 permet également d'entraîner ce même élément de toit 48 vers l'avant jusqu'au début de la déviation de glissière, lorsque l'on referme le panneau avant 40.

Pour favoriser ce coulissement dans les deux sens, chaque crochet d'entraînement 78 présente avantageusement une gorge d'entraînement 80 adaptée pour recevoir le coulisseau 66 correspondant et l'entraîner le long du guide 46 concerné, la gorge se prolongeant, à l'avant, par une paroi d'entraînement 82 adaptée pour entraîner vers l'arrière le coulisseau, le long de la rainure ou glissière 46, cette gorge se prolongeant à l'arrière par un doigt d'entraînement court 84 ménageant une ouverture 86 d'accès pour le coulisseau, par l'arrière du crochet. Ainsi, le doigt d'entraînement court va entraîner le coulisseau 66 (et donc le panneau 48) vers l'avant tant qu'il engagera la rainure 46 suivant sensiblement ladite direction longitudinale 58, mais se dégageant du coulisseau lorsque ce dernier s'engagera dans la déviation 70 lorsqu'il la rencontrera, cette déviation étant pour cela bien entendu alors située dans le prolongement de la rainure et faisant avec elle un angle α obtus pour que le coulisseau puisse s'y engager dans le sens de son entraînement (fig.11).

De plus une autre de surface de contact 88 s'étendant vers le bas et solidaire de la deuxième glissière 44 est située en avant de ladite première zone de contact 76. Cette deuxième zone de contact se trouve sur la partie arrière de la glissière 46 (également appelée première rainure). Dans un déplacement vers l'avant du panneau 40, lorsque le coulisseau 66 le plus en avant du levier 62 se trouve engagé dans la déviation 70 de la glissière 46 et que ce coulisseau se trouve par ailleurs dégagé du crochet 78, la deuxième surface de contact (ou doigt d'entraînement) 88 vient alors en appui sur le coulisseau 68 le plus en arrière pour engager entièrement les deux coulisseaux dans cette déviation et ainsi positionner la panneau de toit 48 dans sa position fermée et basse, au même niveau que l'avant de l'élément 52 et le panneau avant 40.

Pour d'autres détails concernant la disposition relative des glissières (ou rainures) et leur possible commande motorisée, on se reportera à FR-A-2 797 226 (Figures 1,2,6,7 et leur description associée).

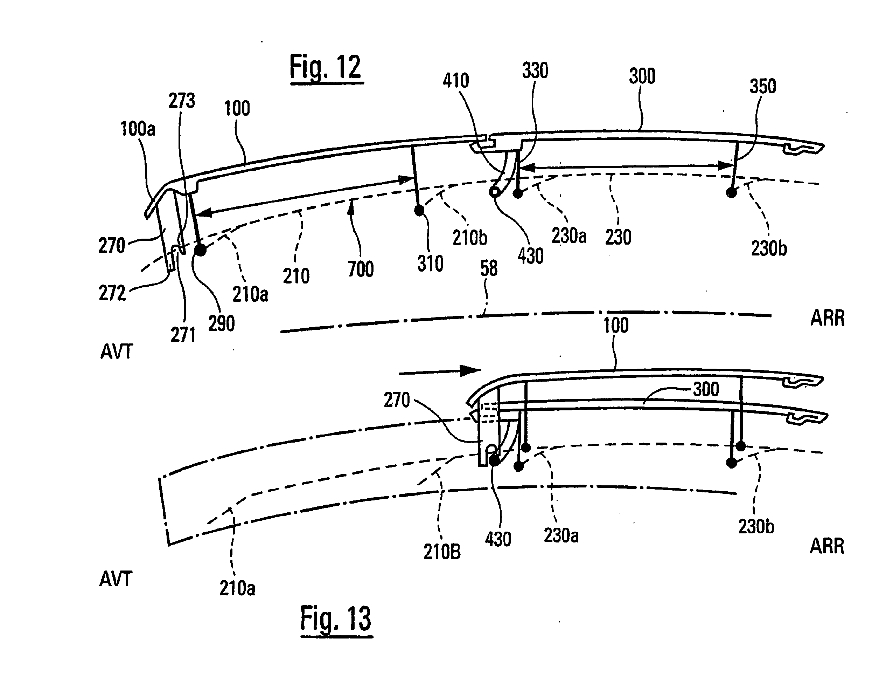

Comme illustré aux figures 12 et 13, dans une alternative de réalisation, l'élément de toit central avant (ou panneau avant) 100 pourrait être monté coulissant sur une première rainure 210 d'un système de glissières 700 s'étendant globalement sensiblement parallèlement à la direction longitudinale 58. Un deuxième élément de toit central intermédiaire (ou panneau arrière) 300 est ici monté coulissant sur une deuxième rainure 230 de la glissière 700.

Dans ce cas, les éléments de toit 100,300 viennent se superposés les uns sur les autres de telle manière que l'élément de toit avant 100 passe au-dessus de l'élément de toit 300 (fig. 13).

La glissière 7 peut être fixée à la structure 53 du véhicule, latéralement le long de barreaux fixes de toit s'étendant longitudinalement au moins le long des bords latéraux de l'ouverture ménagée dans le pavillon du véhicule pour loger le toit ouvrant.

Sur le bord avant 100a de l'élément de toit 100 se situe un élément formant crochet 270.

Cet élément de toit est entraîné vers l'arrière par des moyens connus qui peuvent consister en des câbles flexibles motorisés. Il est engagé dans la première rainure 210 par deux coulisseaux 290,310 espacés d'une distance axiale L. Le premier coulisseau 290 situé le plus en avant de l'élément de toit avant est engagé dans une déviation 210a (correspondant à une accentuation de la pente de la rainure 210) orientée vers l'avant du véhicule et vers le bas. Cette dite déviation se situe à l'extrémité avant de la rainure 210. Le second coulisseau 310 situé le plus en arrière de l'élément de toit 100 est quant à lui engagé dans une seconde déviation arrière 210b de même orientation que la première et distante de cette dernière de la même longueur L précitée. Lorsque le toit avant 100 est entraîné vers l'arrière il est décalé vers le haut grâce à l'orientation de la première déviation 210a, ainsi qu'à l'orientation de la deuxième déviation 210b. La courbure de la rainure 210 permet alors le passage de l'élément de toit avant au-dessus de l'élément de toit 300.

Lorsque l'élément de toit 100 coulisse vers l'arrière, le coulisseau 290 se déplace dans la rainure 210 et, au niveau de la déviation 210b, ce coulisseau se déplace sur un levier basculant alors en position inclinée vers le bas, jusqu'à faire basculer ce levier vers le haut de manière que sa partie arrière obture l'extrémité supérieure de la déviation, après que le coulisseau 310 en soit déjà sorti. On comprend que ce système du guidage sélectif à levier basculant à l'endroit de l'autre déviations arrière 230b en liaison avec le coulisseau correspondant 350. En outre, lors du déploiement des panneaux de toit vers leur position fermée au-dessus de l'habitacle, le cheminement inverse des coulisseaux avant de chaque panneau opère le basculement retour des leviers concernés, avant engagement des coulisseaux arrière associés dans les déviations correspondantes.

L'élément de toit 300 est monté sur la deuxième rainure 230 par deux coulisseaux 330,350 espacés eux aussi d'une longueur L. Le premier coulisseau 330 situé le plus en avant de cet élément de toit est engagé dans la déviation 230a orientée vers l'avant du véhicule et vers le bas. Cette déviation se situe à l'extrémité avant de la deuxième rainure 230 de la glissière. Le second coulisseau 350 situé le plus en arrière de l'élément de toit 300 est quant à lui engagé dans la seconde déviation 230b de même orientation que la première et distante d'elle de la même longueur L. Lorsque le toit 300 est entraîné vers l'arrière par l'élément de toit avant, il est décalé vers le haut grâce à l'orientation des déviations 230a,230b.

Le bord avant de l'élément de toit 300 comporte un bras 410 s'étendant vers le bas et comportant ,à son extrémité basse, un doigt ou un galet 430. Lorsque l'élément de toit avant arrive à l'horizontale au-dessus de l 'élément de toit 300 (fig. 13), le crochet 270 situé sur le bord avant la de l'élément de toit central avant vient en appui sur le dit doigt. Le crochet va alors entraîner vers l'arrière l'élément de toit 300 et le décaler vers le haut le long des deux dites déviations 230a,230b, pour permettre le passage de l'élément de toit central intermédiaire au-dessus d'un autre élément de toit encore plus arrière (non représenté), la courbure de la glissière qui s'étend vers le haut assurant par ailleurs le passage de l'élément de toit avant 100 au-dessus de cet élément de toit plus arrière.

Sur les figures 12 et 13 on notera également la forme du crochet 270 qui est très comparable à celle du crochet 78 de la figure 10, avec sa gorge 271 adaptée pour recevoir le coulisseau 430 et l'entraîner le long du guide correspondant, la gorge se prolongeant, à l'avant, par la paroi 272 adaptée pour entraîner vers l'arrière (ARR) le coulisseau, le long de la rainure 230a puis 230, cette gorge se prolongeant à l'arrière par le doigt court 273 ménageant une ouverture d'accès pour le coulisseau, par l'arrière du crochet, de telle sorte que ce doigt entraîne le coulisseau vers l'avant tant qu'il engage la rainure suivant sensiblement ladite direction longitudinale 58, mais se dégage du coulisseau lorsque ce dernier s'engage dans la déviation 230a qu'il rencontre dans la continuité de son mouvement vers l'avant.

## Revendications

1. Système de toit ouvrant pour un véhicule automobile pourvu d'une structure (50), le système de toit ouvrant comprenant au moins un panneau de toit avant (3, 40, 100) et un panneau de toit arrière (2, 48, 300), lesdits panneaux de toit étant mobiles l'un par rapport à l'autre suivant une direction longitudinale (58) entre :
* une position affleurante dans laquelle les panneaux sont disposés sensiblement au même niveau l'un et l'autre, le panneau de toit avant étant alors situé devant le panneau de toit arrière, suivant ladite direction longitudinale,
* et une position décalée en hauteur dans laquelle les panneaux de toit sont disposés au moins partiellement l'un au-dessus de l'autre, l'un parmi ces panneaux de toit avant et arrière comprenant un groupe de leviers avant (62, 330) et un groupe de leviers arrière (64, 350) articulés, pour basculer entre :
* une position basse dans laquelle le panneau concerné affleure sensiblement une partie environnante de la structure (50) du véhicule,
* et une position haute dans laquelle ledit panneau concerné est décalé en hauteur par rapport au niveau de sa position affleurante,
**caractérisé en ce que** :
- lesdits groupes de leviers avant (62, 330) et arrière (64, 350) sont montés articulés par rapport audit panneau de toit (48, 300) qui les comprend,
- l'un au moins parmi lesdits panneaux de toit (40, 100, 48, 300), à savoir le panneau de toit (48, 300) qui comprend les groupes de leviers (62, 64, 330, 350) et l'autre panneau de toit (40, 100) comprend des moyens d'entraînement (76, 78, 88, 270) pour entraîner ces groupes de leviers et l'autre panneau :
* soit de l'avant vers l'arrière, sur une distance assurant le passage du panneau de toit concerné de sa position affleurante à sa position décalée en hauteur,
* soit de l'arrière vers l'avant, sur ladite distance, mais en sens inverse, pour assurer un passage de ce même panneau de toit de sa position décalée vers sa position affleurante, et
- les groupes de leviers (62, 64, 330, 350) engagent, sous la commande des moyens d'entraînement (76, 78, 88, 270), des guides (42, 44, 46, 230) s'étendant essentiellement sensiblement parallèlement à ladite direction longitudinale, ces guides étant adaptés pour :
* lors du déplacement commandé de l'avant vers l'arrière des groupes de leviers, guider leur basculement de la position affleurante du panneau correspondant vers sa position décalée,
* et, lors du déplacement commandé de l'arrière vers l'avant de ces mêmes groupes de leviers, guider leur basculement de la position décalée du panneau correspondant vers sa position affleurante.

2. Système de toit ouvrant selon la revendication 1, **caractérisé en ce que** les groupes de leviers (62, 64) comprennent individuellement, un levier coudé comprenant une première branche (62a) articulée en rotation sur le panneau de toit correspondant (48) et reliée fixement par un coude à une deuxième branche (62b), laquelle engage l'un desdits guides (42, 44, 46), pour son entraînement guidé.

3. Système de toit ouvrant selon la revendication 1 ou la revendication 2, **caractérisé en ce que** les guides comprennent des glissières équipées de premières rainures (46) dans lesquelles coulissent les groupes de leviers (62, 64), les glissières présentant localement des déviations (70, 72) s'étendant obliquement par rapport à l'horizontale et par rapport à ladite direction longitudinale, sur une longueur suffisante pour recevoir, individuellement, une partie d'un desdits groupes de leviers, de telle sorte qu'une fois engagés dans ces déviations, les groupes de leviers concernés passent, en pivotant, de l'une de leurs positions haute ou basse vers l'autre.

4. Système de toit ouvrant selon la revendication 3, **caractérisé en ce que** :
- l'un des panneaux (40) est monté coulissant par rapport à l'autre (48) suivant ladite direction longitudinale (58), le long de secondes rainures (42, 44) desdites glissières,
- certains au moins des leviers équipant le panneau correspondant comprennent au moins un coulisseau (66) monté glissant dans la première rainure correspondante,
- et ces moyens d'entraînement comprennent un crochet d'entraînement (78) présentant une gorge (80) d'entraînement adaptée pour recevoir ledit coulisseau (66) et l'entraîner le long de la première rainure (46) correspondante, la gorge se prolongeant, à l'avant, par une paroi d'entraînement (82) adapté pour entraîner vers l'arrière le coulisseau correspondant, le long de ladite première rainure (46), cette gorge se prolongeant à l'arrière par un doigt d'entraînement court (84) ménageant une ouverture (86) d'accès pour le coulisseau, par l'arrière dudit crochet d'entraînement, de telle sorte que le doigt d'entraînement court entraîne le coulisseau (66) vers l'avant tant qu'il engage la première rainure (46) suivant sensiblement ladite direction longitudinale, mais se dégageant du coulisseau lorsque ce dernier s'engage dans la déviation (70, 72) de ladite première rainure qu'il rencontre, cette déviation étant alors située dans le prolongement de la première rainure et faisant avec elle un angle (α) obtus pour que le coulisseau puisse s'y engager dans le sens de son entraînement.

5. Système de toit ouvrant selon la revendication 4, **caractérisé en ce que** :
- les coulisseaux (66, 68) sont disposés sur la deuxième branche (62b) de certains au moins des leviers (62, 64),
- lesdits moyens d'entraînement (76, 78, 88) s'étendent suivant ladite direction longitudinale, et
- le panneau (40) avant est monté coulissant par rapport au panneau arrière (48) pour passer sous lui, les déviations (70, 72) de chaque première rainure (46) étant pour cela orientées vers le haut et les groupes de leviers étant liés au panneau arrière sous lequel s' étend la première rainure.

6. Système de toit ouvrant selon l'une quelconque des revendications précédentes, **caractérisé en ce que** les moyens d'entraînement comprennent, vers leur extrémité arrière, un poussoir (76) adapté pour engager au moins un levier des groupes de leviers (62, 64), alors que celui-ci est en position basse et l'entraîner avec lui dans le sens de déplacement vers, l'arrière desdits moyens d'entraînement (76, 78, 88).

7. Système de toit ouvrant selon la revendication 5 ou la revendication 6 rattachée à la revendication 4, **caractérisé en ce que**, le panneau de toit avant (40) étant monté coulissant par rapport au panneau arrière (48) pour passer sous lui, les moyens d'entraînement du panneau de toit avant comprennent, vers leur extrémité arrière, un deuxième doigt (88) d'entraînement adapté pour engager entièrement, dans les déviations correspondantes, le groupe de leviers avant équipant le panneau de toit arrière, une fois ces leviers dégagés du doigt d'entraînement court correspondant, consécutivement à un coulissement vers l'avant du panneau de toit avant, de manière que le panneau de toit arrière passe alors dans sa position affleurante.

8. Système de toit ouvrant selon la revendication 3, **caractérisé en ce que**, le panneau de toit avant (40) étant monté coulissant par rapport au panneau arrière (48) pour passer sous lui, les moyens d'entraînement du panneau de toit avant comprennent, vers leur extrémité arrière, un deuxième doigt (88) d'entraînement adapté pour engager entièrement, dans les déviations correspondantes, le groupe de leviers avant équipant le panneau de toit arrière, consécutivement à un coulissement vers l'avant du panneau de toit avant, de manière que le panneau de toit arrière passe alors dans sa position affleurante.

9. Véhicule automobile pourvu d'un système de toit ouvrant selon l'une des revendications précédentes.

## Claims

1. Retractable roof system for a motor vehicle equipped with a structure (50), the retractable roof system comprising at least a front roof panel (3, 40, 100) and a rear roof panel (2, 48, 300), said roof panels being movable in relation to each other along a longitudinal direction (58) between:
· a flush position in which the panels are placed substantially at the same level as each other, the front roof panel thus being located in front of the rear roof panel, along said longitudinal direction; and
· an off-set position in an upward direction in which the roof panels are placed at least partially one on top of the other;
one of the front and rear panels comprises a group of pivotally mounted front levers (62, 330) and a group of pivotally mounted rear levers (64, 350), so as to tip over between:
- a low position in which said one panel is substantially flush with a surround part of the structure (50) of the vehicle;
- and a high position in which said one panel is off-set in an upward direction in relation to the level of its flush position;
**characterised in that** :
· said groups of front levers (62, 330) and rear levers (64,350) are pivotally mounted in relation to said roof panel (48, 300) which comprises them ;
at least one of said roof panels (40, 100, 48, 300), namely the roof panel (48,300) which comprises the lever groups (62, 64, 330, 350) and the other panel (40, 100), comprises driving means (76, 78, 88, 270) for driving the lever groups and said other panel:
- either from the front towards the rear, along a distance ensuring said roof panel moves from its flush position to its off-set position in an upward direction;
- or from the rear towards the front, along said distance, but in the opposite direction, to ensure the same roof panel moves from its off-set position to its flush position; and
· under the control of the driving means (76, 78, 88, 270), the lever groups (62, 64, 320, 350) engage guides (42, 44, 46, 230) extending essentially substantially parallel to said longitudinal direction, these guides being adapted for:
- during the controlled displacement of the lever groups from the front towards the rear, guiding their tipping over movement from the flush position of the corresponding panel to its off-set position; and
- during the controlled displacement of said lever groups from the rear towards the front, guiding their tipping over movement from the off-set position of the corresponding panel towards its flush position.

2. Retractable roof system as set forth in claim 1, **characterised in that** the lever groups (62, 64) individually comprise a curved lever comprising a first arm (62a) rotatingly articulated on the corresponding roof panel (48) and firmly attached via an elbow to a second arm (62b), which engages one of said guides (42, 44, 46), in order to guidingly drive it.

3. Retractable roof system as set forth in claim 1 or 2, **characterised in that** the guides comprise runners equipped with first grooves (46) in which the lever groups (62, 64) slide, the runners locally having deflected slips (70, 72) extending obliquely in relation to the horizontal and in relation to said longitudinal direction, along a length sufficient to receive, individually, a part of said lever groups, so that once engaged in these deflected slips, the lever groups in question move, by pivoting, from one of their high or low positions towards the other position.

4. Retractable roof system as set forth in claim 3, **characterised in that**:
- one of the panels (40) is slidingly mounted in relation to the other (48) along said longitudinal direction (58), along second grooves (42, 44) of said runners;
- at least some of the levers fitted to the corresponding panel at least comprise a slider (66) slidingly mounted in the first corresponding groove; and
- these driving means comprise a driving hook (78) bearing a driving recess (80) adapted for receiving said slider (66) and driving it along the corresponding first groove (46), the recess extending frontwards via a driving wall (82) adapted for driving the corresponding slider backwards, along said first groove (46), this recess extending backwards via a short driving pin (84) making an inlet (86) for the slider, via the rear of said driving hook, so that the short driving pin drives the slider (66) forward as long as it engages the first groove (46) substantially along said longitudinal direction, but extricating from the slider when the latter engages in the deflected slip (70, 72) of said first groove that it encounters, this deflected slip thus being located in the extension of the first groove and making an obtuse angle (α) with it so that the slider can engage in the direction of its drive.

5. Retractable roof system as set forth in claim 4,
**characterised in that**:
- the sliders (66, 68) are placed on the second arm (62b) of at least some of the levers (62, 64);
- said driving means (76, 78, 88) extend along said longitudinal direction; and
- the front panel (40) is slidingly mounted in relation to the rear panel (48) in order to move under it, the deflected slips (70, 72) of each first groove (46) being, for this purpose, oriented upwards and the lever groups being linked to the rear panel under which the first groove extends.

6. Retractable roof system as set forth in any one of the previous claims, **characterised in that** the driving means comprise, towards their rear end, a push button (76) adapted for engaging at least one lever from the lever groups (62, 64), when said lever is in the low position, and of driving it along with itself in the direction of backwards displacement of said driving means (76, 78, 88).

7. Retractable roof system as set forth in claim 5 or in claim 6 depending on claim 4, **characterised in that**, the front roof panel (40) being slidingly mounted in relation to the rear panel (48) in order to move under it, the driving means of the front roof panel comprise, towards their rear end, a second driving pin (88) adapted for fully engaging, in the corresponding deflected slips, the second arm of the front lever group fitted to the rear roof panel, once these levers are free from the corresponding short driving pin, consecutively with a forward sliding of the front roof panel, so that the rear roof panel then moves into its flush position.

8. Retractable roof system as set forth in claim 3, **characterised in that**, the front roof panel (40) being slidingly mounted in relation to the rear panel (48) in order to move under it, the driving means of the front roof panel comprise, towards their rear end, a second driving pin (88) adapted for fully engaging, in the corresponding deflected slips, the front lever group fitted to the rear roof panel, consecutively with a forward sliding of the front roof panel, so that the rear roof panel then moves into its flush position.

9. Motor vehicle equipped with a retractable roof system as set forth in one of the previous claims.

## Patentansprüche

1. Schiebedachsystem für ein Kraftfahrzeug mit einer Struktur (50), wobei das Schiebedachsystem mindestens eine vordere Dachplatte (3,40, 100) und eine hintere Dachplatte (2, 48, 300) umfaßt, wobei die Dachplatten in Längsrichtung (58) relativ zueinander beweglich sind zwischen:
* einer sichtbaren Position, in der die eine und die andere Dachplatte im wesentlichen auf dem gleichen Niveau angeordnet sind, wobei die vordere Dachplatte dann in Längsrichtung vor der hinteren Dachplatte angeordnet ist,
* und einer in Höhe versetzte Position, in der die Dachplatten zumindest teilweise übereinander angeordnet sind,
wobei die vordere oder die hintere Dachplatte eine vordere Gruppe (62, 330) von Hebeln und eine hintere Gruppe (64, 350) von Hebeln umfaßt, welche angelenkt sind, um zu kippen oder zu schwenken zwischen:
* einer niedrigen Position, in der die betroffene Dachplatte im wesentlichen in einen umliegenden Teil der Struktur (50) des Fahrzeugs übergeht,
* und einer erhabenen Position, in der die betroffene Dachplatte in Höhe relativ zum Niveau der Übergangsposition versetzt ist,
**dadurch gekennzeichnet, daß**
- die vordere (62, 330) und hintere (64, 350) Hebelgruppen relativ zur Dachplatte (48, 300) angelenkt montiert sind, die sie umfaßt,
- mindestens eine der Dachplatten (40, 100, 48, 300), nämlich die Dachplatte (48, 300) die die Hebelgruppen (62, 64, 330, 350) umfaßt und die andere Dachplatte (40, 100), eine Einrichtung zum Mitnehmen (76, 78, 88, 270) umfaßt, um diese Hebelgruppen und die andere Dachplatte mitzunehmen.
* entweder von vorne nach hinten über eine Entfernung, die einen Übergang der betroffenen Dachplatte von ihrer Übergangsposition in ihre in Höhe versetzte Position sicherstellt,
* oder von hinten nach vorne über die Entfernung, aber in umgekehrter Richtung, um einen Übergang derselben Dachplatte von ihrer versetzten Position in ihre Übergangsposition sicherzustellen, und
- die Hebelgruppen (62, 64, 330, 350) unter dem Antrieb der Einrichtung zum Mitnehmen (76, 87, 88, 270) mit Führungen (42, 44, 46, 230) in Eingriff kommen, die sich im wesentlichen parallel zu der Längsrichtung erstrecken, wobei die Führungen dazu ausgelegt sind, um
* bei dem angetriebenen Verschieben der Hebelgruppen von vorne nach hinten deren Kippen oder Schwenken von der egalisierten Position der entsprechenden Dachplatte in ihre versetzte Position zu führen;
* und bei dem angetriebenen Verschieben der gleichen Hebelgruppen von hinten nach vorne deren Kippen oder Schwenken von der versetzten Position der entsprechenden Dachplatte in ihre egalisierte Position zu führen.

2. Schiebedachsystem nach Anspruch 1, **dadurch gekennzeichnet, daß** die Hebelgruppen (62, 64) individuell einen gewinkelten Hebel umfassen, der einen ersten Arm (62a) umfaßt, der drehbar an die entsprechende Dachplatte (48) angelenkt ist und fest über einen Knick mit einem zweiten Arm (62b) verbunden ist, der mit einer der Führungen (42, 44, 46) für seine geführte Mitnahme in Eingriff kommt.

3. Schiebedachsystem nach Anspruch 1 oder 2, **dadurch gekennzeichnet, daß** die Führungen Gleitschienen umfassen, die mit ersten Nuten (46) ausgestattet sind, in denen die Hebelgruppen (62, 64) gleiten, wobei die Laufschienen lokal Ablenkungen (70, 72) aufweisen, die sich schräg relativ zur Horizontalen und relativ zu der Längsrichtung über eine ausreichende Länge erstrecken, um individuell einen Teil der Hebelgruppen aufzunehmen, in der Weise, da8 sobald die betroffenen Hebelgruppen mit den Ablenkungen in Eingriff gekommen sind, sie drehend von der einen ihrer gehobenen oder abgesenkten Position in die andere übergehen.

4. Schiebedachsystem nach Anspruch 3, **dadurch gekennzeichnet, daß**:
- eine der Dachplatten (40) relativ zur anderen (48) in Längsrichtung (58) entlang von zweiten Nuten (42, 44) der Laufschienen gleitend montiert ist,
- mindestens einige der Hebel, die die entsprechende Dachplatte ausstatten, mindestens einen Nutenstein (66) umfassen, der gleitend in der entsprechenden ersten Nut montiert ist,
- und die Mittel zum Mitnehmen einen Haken zum Mitnehmen (78) umfassen, der eine Vertiefung (80) zum Mitnehmen aufweist, die angepaßt ist, um den Nutenstein (66) aufzunehmen und entlang der entsprechenden ersten Nut (46) mitzunehmen,
wobei die Vertiefung sich vorne durch eine Wand (82) zum Mitnehmen fortsetzt, die angepaßt ist, um den entsprechenden Nutenstein nach hinten entlang der ersten Nut (46) mitzunehmen, wobei die Vertiefung sich hinten mit einem kurzen Finger (84) zum Mitnehmen fortsetzt, der eine Eingangsöffnung (86) für den Nutenstein hinter dem Haken zum Mitnehmen ausbildet, in der Weise, daß der kurze Finger zum Mitnehmen den Nutenstein (66) nach vorne mitnimmt, sobald er mit der ersten Nut (46) im wesentlichen entlang der Längsrichtung in Eingriff kommt, aber sich von dem Nutenstein ablöst, wenn der letztere mit der Ablenkung (70, 72) der ersten Nut in Eingriff kommt, auf die er trifft, wobei die Ablenkung dann in Verlängerung der ersten Nut angeordnet ist und mit ihr einen stumpfen Winkel (a) einnimmt, damit der Nutenstein dort in Richtung seiner Mitnahme mit der Ablenkung in Eingriff kommt.

5. Schiebedachsystem nach Anspruch 4, **dadurch gekennzeichnet, daß**:
- die Nutensteine (66, 68) auf dem zweiten Arm (62b) von mindestens einigen der Hebel(62, 64) angeordnet sind,
- die Mittel zum Mitnehmen (76, 87, 88) sich längs der Längsrichtung erstrecken, und
- die vordere Dachplatte (40) gleitend relativ zur hinteren Dachplatte (48) montiert ist, um unter derselben entlangzufahren, wobei die Ablenkungen (70, 72) jeder ersten Nut (46) dafür nach oben orientiert sind und die Hebelgruppen mit der hinteren Dachplatte verbunden sind, unter der sich die erste Nut erstreckt.

6. Schiebedachsystem nach einem der vorangehenden Ansprüche, **dadurch gekennzeichnet, daß** die Mittel zum Mitnehmen bei ihrem hinteren Ende einen Stößel (76) umfassen, der geeignet ist, mit mindestens einem Hebel der Hebelgruppen (62, 64) in Eingriff zu kommen, wenn dieser in der abgesenkten Position ist, und ihn in die Richtung der Verlagerung nach hinten der Mittel zum Mitnehmen (76, 78, 88) mitzunehmen.

7. Schiebedachsystem nach Anspruch 5 oder nach Anspruch 6 in Verbindung mit Anspruch 4, **dadurch gekennzeichnet, daß** die vordere Dachplatte (40) gleitend relativ zur hinteren Dachplatte (48) montiert ist, um unter ihr entlangzufahren, wobei die Mittel zum Mitnehmen der vorderen Dachplatte bei ihrem hinteren Ende einen zweiten Finger (88) zum Mitnehmen umfassen, der angepaßt ist, damit in den entsprechenden Ablenkungen die vordere Hebelgruppe, die die hintere Dachplatte ausstattet, vollständig in Eingriff kommt, sobald die Hebel von dem entsprechenden kurzen Finger zum Mitnehmen abgelöst sind, anschließend an ein Gleiten nach vorne der vorderen Dachplatte, in der Weise, daß die hintere Dachplatte nun in ihre egalisierte Position übergeht.

8. Schiebedachsystem nach Anspruch 3, **dadurch gekennzeichnet, daß** die vordere Dachplatte (40) gleitend relativ zur hinteren Dachplatte (48) montiert ist, um unter ihr entlangzufahren, wobei die Mittel zum Mitnehmen der vorderen Dachplatte bei ihrem hinteren Ende einen zweiten Finger (88) zum Mitnehmen umfassen, der angepaßt ist, damit in den entsprechenden Ablenkungen die vordere Hebelgruppe, die die hintere Dachplatte ausstattet, vollständig in Eingriff kommt, anschließend an ein Gleiten nach vorne der vorderen Dachplatte, in der Weise, daß die hintere Dachplatte nun in ihre egalisierte Position übergeht.

9. Kraftfahrzeug mit einem Schiebedachsystem nach einem der vorangehenden Ansprüche.
